# EUROPEAN PATENT APPLICATION

(11) **EP 2 574 010 A2**
(43) Date of publication of application: **27.03.2013**
(21) Application number: 12185332.9
(22) Date of filing: 21.09.2012
(51) Int. Cl.: H04L 29/08, H04N 7/24, H04N 21/63

(54) **Systems and methods for prioritization of data for intelligent discard in a communication network**

(30) Priority: 23.09.2011 US 201113243507
(71) Applicant: Cygnus Broadband, Inc., San Diego, CA 92128 (US)
(72) Inventor: Stanwood, Kenneth, Carlsbad, CA California 92009 (US); Gell, David, Carlsbad, CA California 92009 (US); Bao, Yiliang, Carlsbad, CA California 92009 (US)
(74) Representative: Boyce, Conor

(57) **Abstract**

Capacity and spectrum constrained, multiple-access communication systems optimize performance by selectively discarding packets. Changes in the communication systems may be driven using control responses. Control responses include intelligent discard of network packets under capacity constrained conditions. Packets are prioritized and discard decisions are made based on the prioritization. Various embodiments provide an interactive response by selectively discarding packets to enhance perceived and actual system throughput, provide a reactive response by selectively discarding data packets based on their relative impact to service quality to mitigate oversubscription, provide a proactive response by discarding packets based on predicted oversubscription, or provide a combination thereof. Packets may be prioritized for discard using correlations between discards and bandwidth reduction and quality degradation. The quality degradation for video packets may be measured objectively.

## Description

### Field of the Invention

The present invention generally relates to the field of communication systems and to systems and methods for optimizing system performance by selectively discarding packets in capacity and spectrum constrained, multiple-access communication systems.

### Background

In capacity and spectrum constrained, multiple-access communication system, two goals are omnipresent: the successful transfer of information, and the minimization of such transmissions from disrupting other transfers. Often these goals are in conflict with each other, and thus represent opportunity for system optimization.

In a cellular network, for example, the creation of a positive user experience is the success criteria for the transport of information. Often this metric is further defined as the quality of service of a particular user task or application. In contrast, this activity can be viewed by its effect on other network users, specifically through the usage of limited system resources and through the creation of channel interference.

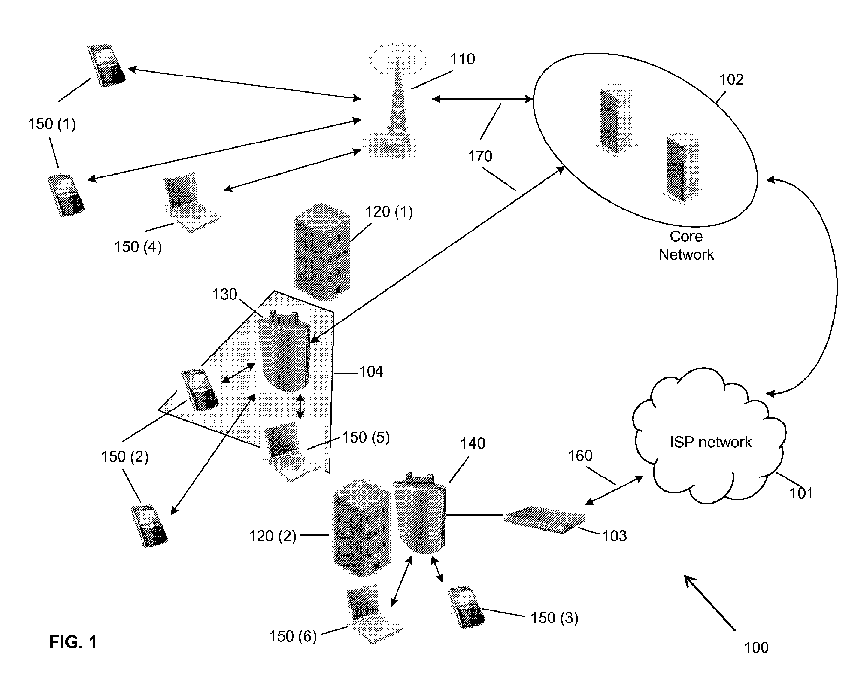

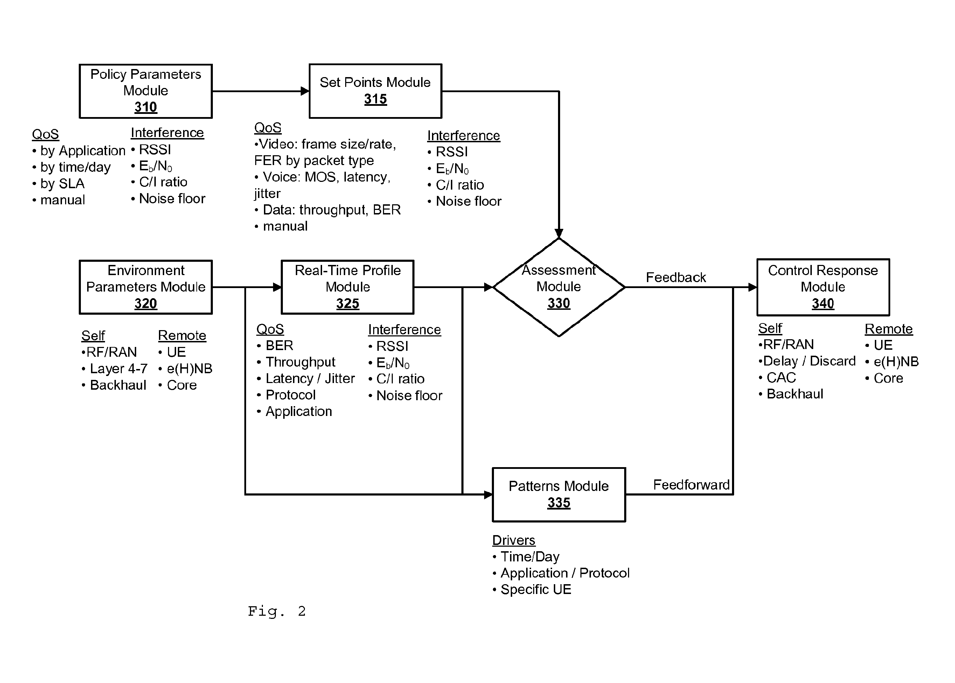

WO 2010/144833 discloses systems and methods for optimizing system performance of capacity and spectrum constrained, multiple-access communication systems by selectively discarding packets such as generally illustrated in Figures 1 and 2. The systems and methods drive changes in the communication system using control responses including the optimal discard (also referred to as "intelligent discard") of network packets under capacity constrained conditions. Some embodiments provide an interactive response by selectively discarding packets to enhance perceived and actual system throughput, other embodiments provide a reactive response by selectively discarding data packets based on their relative impact to service quality to mitigate oversubscription, others provide a proactive response by discarding packets based on predicted oversubscription, and others provide a combination thereof.

### Summary

In one aspect, the present invention provides a communication device for managing packet discards in a communication network. The communication device includes: a video quality measurement module configured to receive packets containing frames of a video stream and to determine contributions of the frames to quality measurements of the video stream; a priority assignment module configured to receive the contributions of the frames to the quality measurement of the video stream and assign priorities to the packets utilizing the contributions of the frames to the quality measurements; and a selection module configured to select at least one of the packets for discard utilizing the assigned priorities and to supply the packets not selected for discard for transmission in the communication network.

In a further aspect, the video quality measurement module is further configured to calculate an objective video quality measurement for use in determining the contributions of the frames to the quality measurement of the video stream.

In another aspect, the invention provides a method for operating a communication device for managing packet discards before transmission in a communication network. The method includes: receiving packets for transmission, at least some of the packets associated with video streams; determining a priority for each of the packets, wherein the priority of the packets associated with the video streams includes impacts of discarding the packets associated with the video streams on video quality of the video streams; determining whether reduced bandwidth should be used to transmit the packets; selecting, utilizing the determined priorities, at least one of the packets for discard when it is determined that reduced bandwidth should be used to transmit the packets; and transmitting the packets not selected for discard to the communication network.

In a further aspect, determining the priority for each of the packets includes calculating a contribution to an objective video quality measurement for each of the packets associated with the video streams.

In another aspect, the invention provides a method for operating a communication device for managing packet discards before transmission in a communication network. The method includes: receiving packets for transmission; assigning a priority for each of the packets, wherein the priorities of the packets include impacts of discarding the packets on quality of services associated with the packets; placing the packets in queues before transmitting the packets; determining whether reduced bandwidth should be used to transmit the packets; selecting, utilizing the determined priorities, at least one of the packets for discard when it is determined that reduced bandwidth should be used to transmit the packets; transmitting the packets not selected for discard from the queues to the communication network.

In a further aspect, determining whether reduced bandwidth should be used to transmit the packets is based at least in part on a depth of packets in the queues.

Preferably, packets in one of the queues are selected for discard when the one of queues is more than a predetermined percentage full.

Further preferably, the number of packets selected for discard increases when the percentage full of the one of the queues is more than a second predetermined percentage full.

Preferably, packets are selected for discard when the packets have been in one of the queues for a predetermined time.

Further preferably, the packets selected for discard when the packets have been in one of the queues for the predetermined time are removed from the one of the queues. Here, the predetermined time is greater for packets assigned higher priorities.

Other features and advantages of the present invention should be apparent from the following description which illustrates, by way of example, aspects of the invention.

### Brief Description of the Drawings

The details of the present invention, both as to its structure and operation, may be gleaned in part by study of the accompanying drawings, in which like reference numerals refer to like parts, and in which:
Fig. 1 is a block diagram of one wireless communication network in which the systems and methods according to the present invention can be implemented;
Fig. 2 is a logical block diagram of a general system for mitigating effects of interference scenarios in a wireless communication network;
Fig. 3 is a diagram showing data flow in a network video application according to an embodiment;
Fig. 4A is a logical block diagram of a control response module in a system for mitigating effects of interference scenarios in a wireless communication network;
Fig. 4B is a diagram of a packet priority/burden determination module based on objective video quality measurement according to an embodiment;
Fig. 4C is a diagram showing the structure of an example H.264 bitstream;
Fig. 4D is a diagram of an H.264 NAL unit header;
Fig. 5 is a diagram illustrating an example group of pictures with four frames including one I frame and three P frames;
Fig. 6A is a diagram showing the structure of an SVC NAL unit according to an embodiment;
Fig. 6B is a diagram of the structure of NAL unit header SVC extension according to an embodiment;
Fig. 6C is a diagram illustrating the structure of an example SVC bitstream;
Fig. 6D is a diagram illustrating the structure of an example SVC bitstream for five video frames;
Fig. 7 is a flow diagram of a method of discarding packets as they are being queued by the scheduler according to an embodiment; and
Fig. 8 is a flow diagram of a method of discarding packets after they are placed in the buffers used by the scheduler according to an embodiment.

### Detailed Description

### Basic Deployments

Fig. 1 is a block diagram of one wireless communication network in which the systems and methods disclosed herein can be implemented according to an embodiment. (Other suitable networks are disclosed in WO 2010/144833.) Fig. 1 illustrates a typical basic deployment of a communication system that includes macro cells, Pico cells, and enterprise Femtocells. In a typical deployment, the macro cells can transmit and receive on one or many frequency channels that are separate from the one or many frequency channels used by the small form factor (SFF) base stations (including Pico cells and enterprise or residential Femtocells). In other embodiments, the macro cells and the SFF base stations can share the same frequency channels. Various combinations of geography and channel availability can create a variety of interference scenarios that can impact the throughput of the communications system.

Fig. 1 illustrates a typical Pico cell and enterprise Femtocell deployment in a communications network 100. Macro base station 110 is connected to a core network 102 through a standard backhaul 170. Subscriber stations 150(1) and 150(4) can connect to the network through macro base station 110. In the network configuration illustrated in Fig. 1, office building 120(1) causes a coverage shadow 104. Pico station 130, which can be connected to core network 102 via standard backhaul 170, can provide coverage to subscriber stations 150(2) and 150(5) in coverage shadow 104.

In office building 120(2), enterprise Femtocell 140 provides in-building coverage to subscriber stations 150(3) and 150(6). Enterprise Femtocell 140 can connect to core network 102 via ISP network 101 by utilizing broadband connection 160 provided by enterprise gateway 103.

### Avoidance and Mitigation Techniques

Fig. 2 is a logical block diagram illustrating an example of the functional elements of a multivariate control system for mitigating the effects of various interference scenarios in a capacity and spectrum constrained, multiple-access communication network, such as those described above. The functionality of the system shown in Fig. 2 is broken down into modules to more clearly illustrate the functionality of the control system. The control system can be implemented in a macro cell base station, Pico cell, or Femtocell, such as macro cell base station 110, pico station 130, and residential Femtocell 240 illustrated in Fig. 1. Alternatively, portions can be distributed to a base station controller (BSC) or other element of core network 102. In one embodiment, the control system is implemented in a MAC layer of a base station.

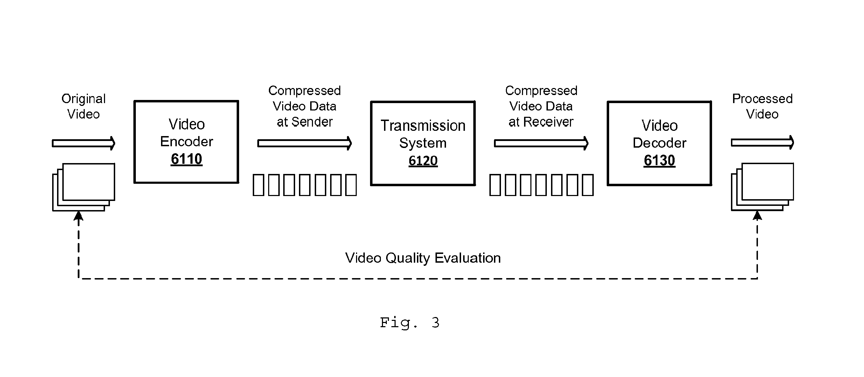

Fig. 3 illustrates an end-to-end network video application with three major modules, namely video encoder 6110, transmission system 6120, and video decoder 6130. In one embodiment, transmission system 6120 comprises devices of the communications network 100 (Fig. 1) including the control system illustrated in Fig. 2.

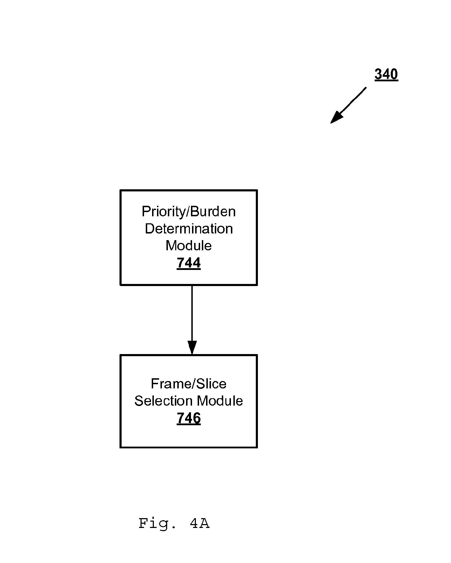

Fig. 4A is a functional block diagram of one example of control response module 340 of Fig. 2. If demand exceeds maximum aggregate throughput for the network, the control response module 340 can respond by selectively discarding frames within a service to reduce demand on the network. In Fig. 4A, the control response module 340 comprises a priority / burden determination module 744 ("determination module") and a frame / slice selection module 746 ("selection module"). As described in greater detail below, the choice of which frame or slice to discard can have significant effects on the quality of the viewing experience in the resulting video. In one embodiment, determination module 744 determines a value, e.g., burden or priority, that represents the relative importance of that frame compared to other frames. The selection module 746 then selects one or more to discard or drop based on the determined value. The operation of the determination module 744 and the selection module 746 are described in greater detail below.

### Intelligent Discard based on Video Quality Measurement

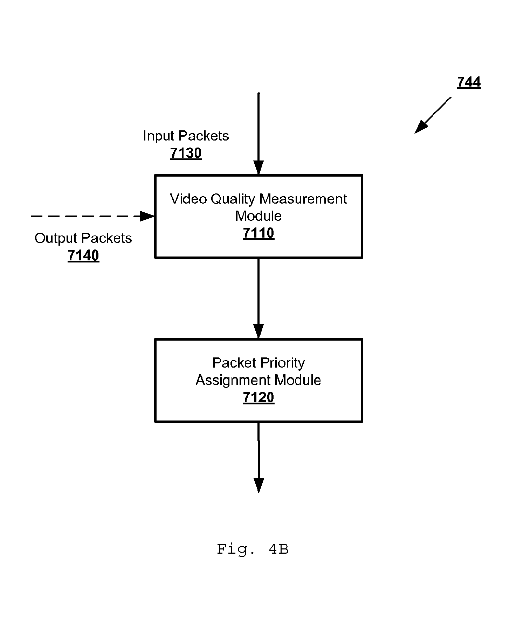

Fig. 4B illustrates an embodiment of Priority/Burden Determination Module 744. In this embodiment, the determination module 744 comprises a video quality measurement module 7110 and a packet priority assignment module 7120. Input packets 7130 are the packets received by a device implementing control response module 340. Output packets 7140 are the packets output by the device after intelligent discard. In some embodiments, the video quality measurement module 7110 receives identifiers of the discarded packets rather than the output packets 7140. The video quality measurement module 7110 calculates the contribution of a video packet to the overall video quality based on an objective video quality measurement. The packet priority assignment module 7120 assigns the priority of a video packet based on the output from the video quality measurement module 7110. A packet is assigned a higher priority if it contributes more to the overall video quality than another packet.

Video quality can be measured either subjectively or objectively. Subjective video quality measurement generates a Video Mean Opinion Score (VMOS), which may include multiple scores or averages of scores, based on human observation. Humans are typically the final consumer of the video, so human opinion about the video quality is vitally important. However, subjective video quality measurement is expensive because of human involvement and the result is often not precisely reproducible. More importantly, the subjective video quality measurement cannot be incorporated into a system to make automated decisions for intelligent discard at run time. In contrast to subjective video quality measurement, objective video quality measurement relies on mathematical computations to evaluate the video quality. The result generated from the objective video quality measurement may be correlated with that from subjective measurement. In this description, VMOS may refer to the result from either subjective or objective video quality measurement.

Objective video quality measurement algorithms may be categorized into three categories, namely full-reference, reduced-reference, and no-reference objective video quality measurement. The major difference among the categories lies in how much information about a reference video is available and used in the objective measurement. The reference video refers to the video that is not compromised by the system under test. For example, if it is desired to measure the performance of the end-to-end system of Fig. 3 from input to the video encoder 6110 to the output of the video decoder 6130, the reference video is the original video input to the video encoder 6110, and the video to be evaluated is the processed video output from the video decoder 6130.

A full-reference video quality measurement algorithm measures the quality of processed video with the presence of a full reference video. Examples of full-reference video quality measurement algorithms include PSNR (Peak Signal to Noise Ratio) and more sophisticated algorithms, such as those standardized in ITU.T J.247 ("Objective perceptual multimedia video quality measurement in the presence of a full reference"). If a full-reference objective quality measurement algorithm is used, the input packets 7130 include packets corresponding to the reference video (referred to as reference video input packets) in addition to packets corresponding to the video under test (referred to as test video input packets). The reference video input packets are used as information in the video quality measurement module 7110 and are not transmitted over the communication link as part of the output packets 7140.

A reduced-reference video quality measurement algorithm uses side information extracted from the reference video, instead of full reference video, in evaluating the quality of processed video. The side information often requires much less bandwidth to transport, so it can be more readily made available than full reference video. Examples of reduced-reference video quality measurement algorithms include those standardized in ITU.T J.246 ("Perceptual visual quality measurement techniques for multimedia services over cable television networks in the presence of reduced bandwidth reference"). If a reduced-reference quality measurement algorithm is used, the input packets 7130 include reference video input packets, which contain information extracted from the reference video, in addition to packets corresponding to the test video input packets. The reference video input packets are used as information in the video quality measurement module 7110 and are not transmitted over the communication link as part of the output packets 7140. The amount of data in the reference video packets used in a system employing reduced-reference video objective quality measurement is much less than the amount of data in the reference video input packets used in a system employing full-reference video quality measurement. This reduces, for example, the traffic over the backhaul (e.g. standard backhaul 170 in Fig. 1 or broadband connection).

A no-reference video quality measurement algorithm measures the quality of processed video without any information from the reference video. An example of a no-reference video quality measurement algorithm measures the quality of the video after packet discard based on the type of frame in the packet payload and the amount of data discarded. Some examples of such algorithms are described in more detail in the following sections.

The video quality measurement module 7110 measures the quality based on the output packets 7140 which are the packets output by the device after intelligent discard, in addition to the test video input video packets, as well as the reference video input packets, if either a full-reference or a reduced-reference video quality measurement algorithm is used. The impact of dropping a packet to the video quality depends on the output packets 7140. For example, if a packet "A" containing a reference frame has already been dropped, a packet "B" contains a frame which is predicted from that reference frame will have different priority compared with a case when the packet "A" is not dropped.

In various embodiments of the invention, the video quality measurement module 7110 may implement a full-reference, a reduced-reference, or a no-reference objective quality measurement algorithm. Additionally, in some embodiments, the video quality measurement module 7110 may implement multiple types of algorithms. For example, a reduced-reference objective quality measurement algorithm may be used for one video stream and a no-reference objective quality measurement algorithm may be used for another video stream.

### Prioritization for Intelligent Discard

In MPEG-2, MPEG-4, and H.264-AVC (MPEG-4 Part 10) a video stream is encoded into different types of frames: intra-code frames or I frames, sometimes referred to as Intra frames, predictive-coded frames or P frames, and bidirectionally-predictive-coded frames or B frames. A frame represents what is displayed on the viewing screen at the frame rate of the viewing device. For instance, the NTSC standard used in the United States operates at 29.97 frames per second. The frames are comprised of macroblocks. A macroblock corresponds to a 16x16 pixel region of a frame.

The different frame types have different dependencies which can impact error propagation in the video signal. I frames are encoded such that they are not dependent on any other frames. This causes I frames to typically contain the largest amount of data. P frames are encoded based on an I frame or P frame. This allows encoding of primarily the differences between the current P frame and the I or P frame on which it is dependent. This in turn allows P frames to typically contain less data than I frames, i.e. they are smaller and consume less bandwidth to transmit. However, an error in the frame on which a P frame is dependent will propagate errors into the decoding of the P frame even if it is received error free. B frames are dependent on both a preceding I or P frame and a following I or P frame. This dual dependency allows B frames to typically contain less data than either I frames or P frames, but furthers error propagation. I frames and P frames are often referred to as anchor frames or reference frames.

These dependencies are realized at the macroblock level. I frames only contain I macroblocks which are encoded without dependencies on macroblocks in other frames. P frames may contain I macroblocks or P macroblocks, or both. P macroblocks are encoded based on a previous (or next) I frame or P frame. B frames may contain I, P, or B macroblocks or any combination. B macroblocks are bidirectionally encoded based on both a previous and a subsequent I or P frame.

The pattern of I frames, P frames, and B frames and the associated decode dependencies are referred to as a group of pictures (GOP) or a predictive structure. The ability to predict or the knowledge of the GOP and the relative error propagation or information carrying potential of frames or portions of frames can be used, as described later, to create rules for discarding packets that take into account the degradation in service quality such discard imparts to that service and relative to other services.

In addition, H.264-AVC augments the allowable dependencies with multi-reference predictive structure such that a P frame may be dependent on multiple I or P frames. It also adds hierarchical predictive structures which allow B frames to be dependent on other B frames rather than only I and P frames. Embodiments involving both the baseline implementation and the augmentations are described below.

H.264 is different from earlier standards such as MPEG-2 in that it decouples whether a picture is used as a reference picture (signaled in nal_ref_idc in NAL unit header) from how the picture is encoded (slice_type in slice header). Such a design offers greater flexibility in addition to the hierarchical predictive structure.

H.264 bitstream structure is conceptually specified in two different layers, Video Coding Layer (VCL) and Network Abstraction Layer (NAL). VCL is specified to efficiently represent the content of the video data, while NAL provides network friendly encapsulation of VCL data and ancillary data needed in decoding VCL data. NAL units can be classified into VCL NAL units and non-VCL NAL units. VCL NAL units include coded slice NAL units and coded slice data partition NAL units. Other NAL units are non-VCL NAL units, such as sequence parameter set (SPS) and picture parameter set (PPS), which define the sequence-level and picture-level parameters that are referred to in the coded slices.

Note that H.264 defines a picture as a collective term for a frame or a field in interlaced video, because two fields of an interlaced frame can be encoded separately. Also note that H.264 encodes each picture into one slice or multiple slices. Each slice has its own slice header which includes a syntax element slice type to indicate whether the slice is an I slice, P slice, or B slice, among other slice types. However, apart from some common parameters defined in SPS and PPS, there is no picture header associated with each coded picture. The payload of a VCL NAL unit is a coded slice or coded slice data partition rather than a coded picture. H.264 specification allows that a picture may be encoded into slices of different types, although a practical encoder may encode a picture into slices of the same type. An IDR (Instant Decoding Refresh) picture is a special type of picture. All coded pictures that follow an IDR picture in decoding order can be decoded without inter prediction from any picture that precedes the IDR picture in decoding order. The first picture of each coded video sequence in decoding order is an IDR picture. A slice in an IDR picture can be either an I slice or an SI slice. In some H.264 related discussions in this description, frame and picture are used interchangeably. In this case, a frame is equivalent to a coded picture consisting of slices of the same type. For example, an I frame means a coded picture that consists of only I slices.

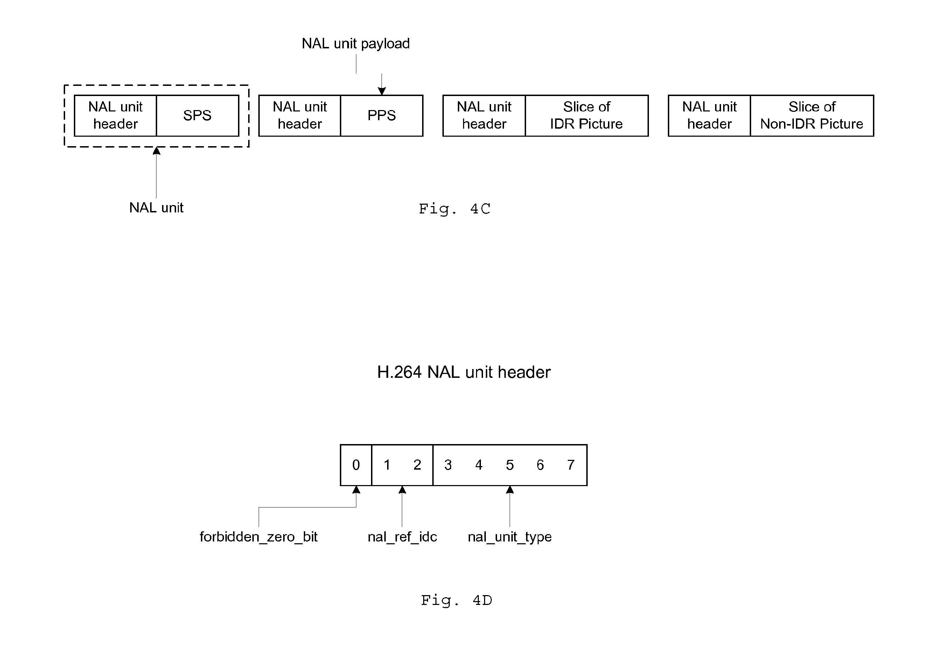

Each NAL unit is formed with a 1-byte NAL unit header and NAL unit payload. Fig. 4C shows the structure of a simple H.264 bitstream as an example. In this particular example, the bitstream contains one SPS and one PPS, and the IDR picture only contains one slice. However, there can be one or more instances for each of these NAL units in the bitstream.

The NAL unit header contains three fields:forbidden_zero_bit, nal_ref_idc, and nal_unit_type. This structure of NAL unit header is shown in Fig. 4D along with the bit width of each field. Field forbidden_zero_bit is always zero in a H.264 bitstream. Field nal_ref_idc indicates whether a NAL unit is used in decoding a reference picture. A reference picture is a picture that may be used in decoding subsequent pictures in the decoding order. If nal_ref_idc is zero, it means the NAL unit is not used in decoding subsequent pictures in the decoding order. Field nal_ref_idc should have the same value for all the slices in the same picture. Although field nal_ref_idc has two bits, what is meaningful to an H.264 decoder is whether field nal_ref_idc is zero or non-zero.

NAL units of many different types can have nal_ref_idc set to 0. Examples are, a NAL unit that contains a coded slice of a non-reference picture, a NAL unit that contains a coded slice data partition of a non-reference picture, a Supplemental Enhancement Information (SEI) NAL unit, an Access Unit Delimiter NAL unit, an End of Sequence NAL unit, an End of Stream NAL unit, or a Filler Data NAL unit.

The NAL unit structure used in an H.264 bitstream is also extended to H.264 RTP payload format (H.264 RTP payload format is described in IETF RFC 6184, Y-K Wang, et al., "RTP Payload Format for H.264 Video"). When H.264 data is carried in RTP packets, field forbidden_zero_bit may be set to 1 if it is detected that the NAL unit contains a bit error or syntax violation. Field nal_ref_idc may be set to a value of finer granularity, instead of just zero or non-zero, to indicate the relative transport priority as determined by the encoder or any other device that performs post-processing on the bitstream.

In some systems, the control response module 340 can respond by dropping frames. One approach is for the control response module 340 to select a frame to drop based on the types of frames being transmitted. For example, given the choice between I, P, and B frames, the control response module can be configured to drop B frames before P frames and P frames before I frames. The decision of which frame amongst several of the same type can be made, for example, at random. For an H.264 video stream, field nal_ref_idc in NAL unit header can be checked so a NAL unit with nal_ref_idc equal to 0 is discarded before a NAL unit with nonzero nal_ref_idc. NAL units of many different NAL unit types can have nal_ref_idc set to 0. In one embodiment, Filler Data NAL units, if they are present, can be discarded before NAL units of other NAL unit types. In another embodiment, among the NAL units with nal_ref_idc equal to 0, the non-VCL NAL units may be discarded before VCL NAL units. A NAL unit, referred to as "NAL_c" for the purpose of discussion, originally with nal_ref_idc equal to a non-zero value may be no longer used in decoding a reference picture, after the NAL units that depend on "NAL_c" are discarded. In one embodiment, the control response module 340 may modify the nal_ref_idc value of NAL unit "NAL_c" from a non-zero value to zero.

For an H.264 bitstream, nal_ref_idc in NAL unit header may have been set by the encoder to indicate the transport priority of the NAL unit. For example, RFC 6814 recommends that an encoder should set nal_ref_idc to 3 for SPS (sequence parameter set), PPS (picture parameter set) and coded slice of an IDR picture, to 2 for non-IDR coded slice of a reference picture and coded slice data partition A of a reference picture, and to 1 for coded slice data partition B or coded slice data partition C of a reference picture. In one embodiment, the nal_ref_idc value is used by the priority/burden determination module 744 in determining the priority or burden of a video packet. For example, the priority determination module 744 sets a P slice with nal_ref_idc equal to 0 to a lower priority than a P slice with nal_ref_idc equal to 2. In one embodiment where nal_ref_idc is set to a multiplicity of values, priority/burden determination module 744 forwards the setting of nal_ref_idc to frame/slice selection module 746 to use in choosing frames or slices for discard.

As discussed above, the value of nal_ref_idc that is meaningful to an H.264 decoder is zero or non-zero, so it is common for an encoder to choose a single nonzero value, such as 1, for any nonzero nal_ref_idc. In one embodiment, the control response module 340 modifies nal_ref_idc to reflect the transport priority of the packets more accurately, if it was not originally set properly by the encoder. This will help other functions in the transmission system 6120 which uses the priority of the video packets. For instance, the modified nal_ref_idc may be used by frame/slice selection module 746 in choosing frames or slices for discard.

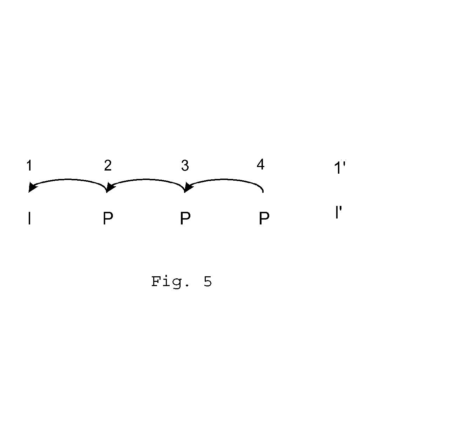

In another embodiment, nal_ref_idc is modified in the control response module 340 to reflect the transport priority of the packets more accurately, if some related packets are discarded. Fig. 5 illustrates a GOP of four frames including one I frame and 3 P frames. Assume that nal_ref_idc is set to 2 in all slices of frame 3. If frame 4 is discarded, nal_ref_idc in all slices of frame 3 is lowered. This will help other functions in the transmission system 6120 which use the priority of the video packets, such as frame/slice selection module 746.

### Scalable Video Bitstream

H.264 has a Scalable Video Coding (SVC) extension. An SVC encoder can generate a video bitstream with a layered structure. The base layer of an SVC bitstream can be decoded properly by an H.264-compliant decoder. The enhancement layer can improve the video fidelity in different dimensions, such as Signal to Noise Ratio (SNR), spatial resolution or temporal resolution. Temporal scalability is a feature that exists in H.264, however, syntactical features introduced in SVC make it easier to use.

Herein, H.264 normally refers to the part of H.264 specification excluding SVC and MVC (Multi-view Video Coding) extensions, and SVC refers to Scalable Video Coding extension as specified in Annex G of the H.264 specification.

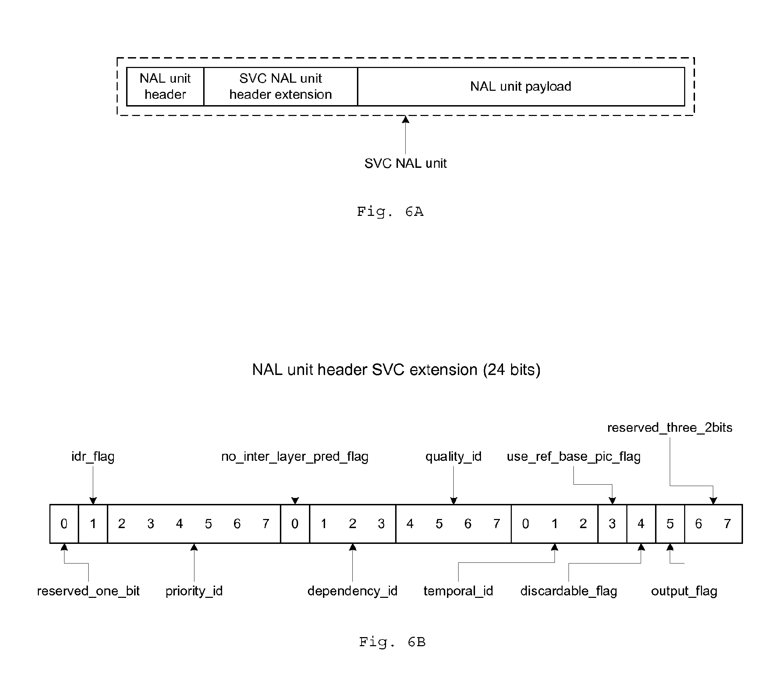

SVC is backward compatible with H.264, so an SVC decoder can decode all NAL units defined in H.264. SVC also introduces new NAL unit types whose values are reserved in H.264. An SVC bitstream may contain three NAL unit types that are not present in H.264. They are Prefix NAL unit (nal_unit_type equal to 14), Subset Sequence Parameter Set (nal_unit_type equal to 15), and Coded Slice Extension NAL unit (nal_unit_type equal to 20). The structure of a Subset Sequence Parameter Set NAL unit is the same as that of any H.264 NAL unit, but the Prefix NAL unit and Coded Slice Extension NAL unit have a different structure as illustrated in Fig. 6A. These two NAL unit types have a 24-bit NAL unit header SVC extension following the 8-bit H.264 NAL unit header.

Fig. 6B shows the structure of the 24-bit NAL unit header SVC extension. Field priority_id is a priority identifier. If it is set, a lower value of priority_id indicates a higher priority. However, its value does not affect the decoding process and may be set by the application if necessary within the constraints defined in the specification. Field dependency_id specifies the dependency identifier of an NAL unit. All NAL units with the same dependency_id belong to the same dependency representation. A dependency representation corresponds to either a spatial scalability layer or a coarse grain SNR (CGS) scalability layer with zero or more medium grain SNR scalability layer. CGS layer is similar to spatial scalability layer, and the layers use the same set of inter-layer prediction coding tools. CGS layer provides SNR enhancement to the video at the same resolution, while spatial scalability layer provides enhancement to the video resolution. Field temporal_id indicates the temporal scalability layer. Field quality_id is assigned to medium grain SNR (MGS) scalability layer. The MGS scalability layer also provides SNR enhancement to the video of the same resolution, but it achieves this by progressively refining the signal fidelity by transmitting additional transform coefficients.

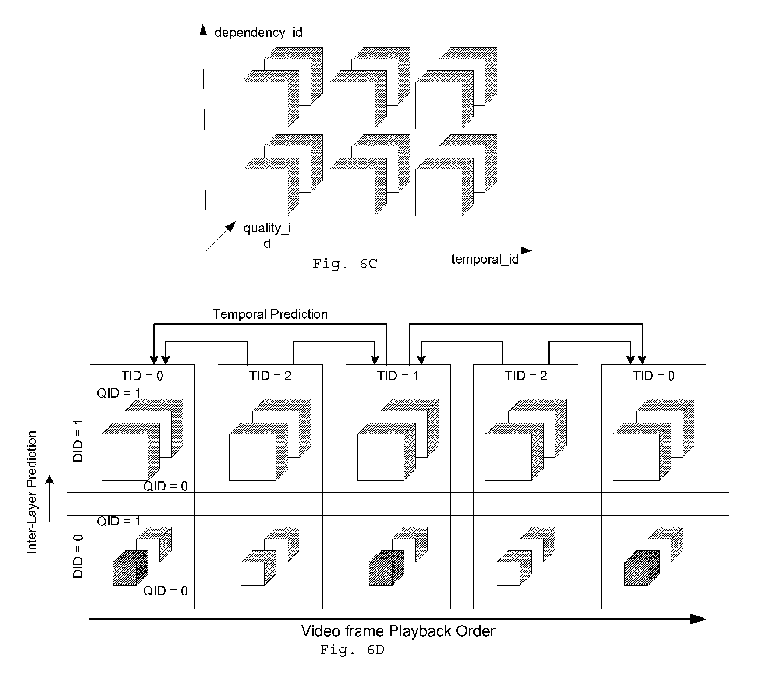

Fig. 6C illustrates the SVC bitstream hierarchy. In this 3-dimensional diagram, each cube corresponds to all NAL units in the entire bitstream having the same tri-tuple (dependency_id, temporal_id, quality_id). Bitstream parsing and extraction can be performed with the aid of these 3 fields in the SVC extension of the NAL unit header.

Figure 6D illustrates the structure of a sample SVC bitstream having 3 temporal levels, 2 dependency levels, and 2 quality levels. The layer having higher dependency_id value is a spatial scalability layer with twice as much resolution in each dimension as that of the base layer which has smaller dependency_id value. In this diagram, each cube corresponds to all the NAL units having the same tri-tuple (dependency_id, temporal_id, quality_id) for one picture. This diagram shows the bitstream of 5 frames. If the user would like to extract the video bitstream with low resolution, it can be achieved by discarding all NAL units with dependency_id larger than 0. Temporal scalable layers can be extracted in a similar fashion except that temporal_id needs to be checked instead of dependency_id. Quality layers can be dropped to have fine control of trade-off between the bit rate and video quality. If the maximum frame rate is 30 frames per second (FPS), and it is desired to extract the bitstream with lower resolution at low quality level, at 15FPS, the bitstream extractor can simply keep the NAL units with dependency_id equal to 0, quality_id equal to 0, and temporal_id less than 2 and discard all other NAL units. In Fig. 6D, cubes in dark color correspond to the part of the bitstream that is not discarded for this example.

In one embodiment, the control response module 340 uses nal_ref_idc in NAL units in an SVC bitstream in a similar way as in an H.264 bitstream discussed above.

An SVC encoder may set the priority_id field of Prefix NAL unit and Coded Slice Extension NAL unit to indicate the transport priority. In one embodiment, the value of field priority_id can be used in determining the order of discarding the packets. In another embodiment, the value of priority_id can be modified to reflect the transport priority of the packets more accurately, either when it was not set properly or when the priority of a packet is changed because of discarding of related NAL units.

### Packet Prioritization Based on Other Video Characteristics

In an embodiment, packets are intelligently discarded based on the priority at least partially determined from the video characteristics, such as the video resolution, video frame rate video data rate, which are in turn determined or estimated from the video stream or signaling messages. The priority of a video packet, which determines how the packets should be discarded, may be adjusted depending on the data rate of the video stream. For example, when congestion just starts, the priority of a packet of a higher data rate stream is adjusted to be lower than that of a packet of a lower data rate. The priority of a packet may also be adjusted by an amount proportional to video frame size, but inversely proportional to frame rate. For example, an individual frame of a video stream operating at 60 frames per second is a smaller percentage of the data over a given time period than an individual frame of a video stream operating at 30 frames per second. Since the loss of a frame in a video stream operating at 60 frames per second would be less noticeable than the loss of a frame in a video stream operating at 30 frames per second, the stream operating at 30 frames per second may be given a higher priority than the stream operating at 60 frames per second.

Once video frames are prioritized, for example, using the techniques described above, a scheduler in a transmitting device such as a wireless base station on the downlink or a subscriber station (e.g., a wireless fixed, portable, or mobile user device) on the uplink may use this information to intelligently discard during periods of congestion or to optimize the admission of calls and services into the system. In these systems, video frames are typically carried in data packets such as Internet Protocol (IP) packets.

A set of relationships between bandwidth demand reduction and video quality degradation can be created for various discard scenarios for H.264 SVC video streams. For instance, each level of dependency_id, quality_id, and temporal_id for a particular video stream may be correlated to an estimated reduction in bandwidth required for the stream and also may be correlated to an estimated reduction in video quality. Similarly, each combination of levels for the set of parameters may be correlated to an estimated reduction in bandwidth coupled with a corresponding reduction in video quality. By creating these associations between bandwidth reduction and the resultant degradation, intelligent discard mechanisms can optimally discard a quantity of data necessary to mitigate or avoid congestion while keeping the video quality degradation within the constraints of policy.

One skilled in the art would understand that the quality metric value may be applied differently to individual video streams, video stream applications (e.g. Youtube versus Netflix), users, user SLA categories, classes of service, scheduler queues or combinations thereof. For instance, if an MPEG-4 and an H.264 SVC stream are simultaneously present, the application of the quality metric would be based in part on the characteristics of video technology. In an embodiment, packets in an MPEG-4 stream may be prioritized higher than packets in an H.264 SVC stream since video quality of the MPEG-4 steam is impacted more by discards than the H.264 SVC stream. Similar prioritizations may be used with other video encodings so that packets in video streams encoded using protocols with higher immunity to discards are more likely to be discarded.

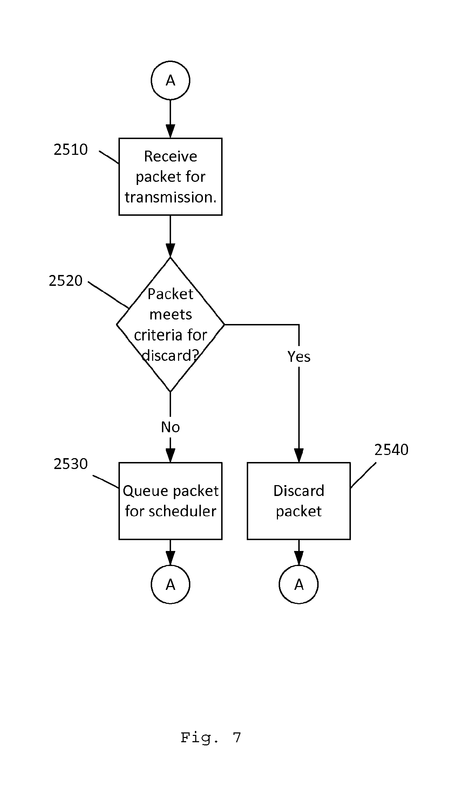

In an embodiment, the discard criteria used in step 2520 of Fig. 7 may be based upon queue depth. If a queue serving a video stream reaches x% of its capacity, B frames may start being discarded until the queue falls below x% full. In some embodiments, hysteresis is provided by including a delta between the levels at which discarding begins and ends. Additionally, when the queue is x'% full, where x' > x, P frames may be discarded. Since queue depth increase can be a sign of overall link congestion or a sign of an individual stream desiring more bandwidth than it is allowed, for instance under the users service agreement, this technique allows intelligent discard to be applied to an individual stream regardless of whether the wireless link as a whole is congested. One skilled in the art would realize that the methods described in previous paragraphs that match rate reductions with quality degradations could also be applied in response to SLA limits rather than overall link congestion.

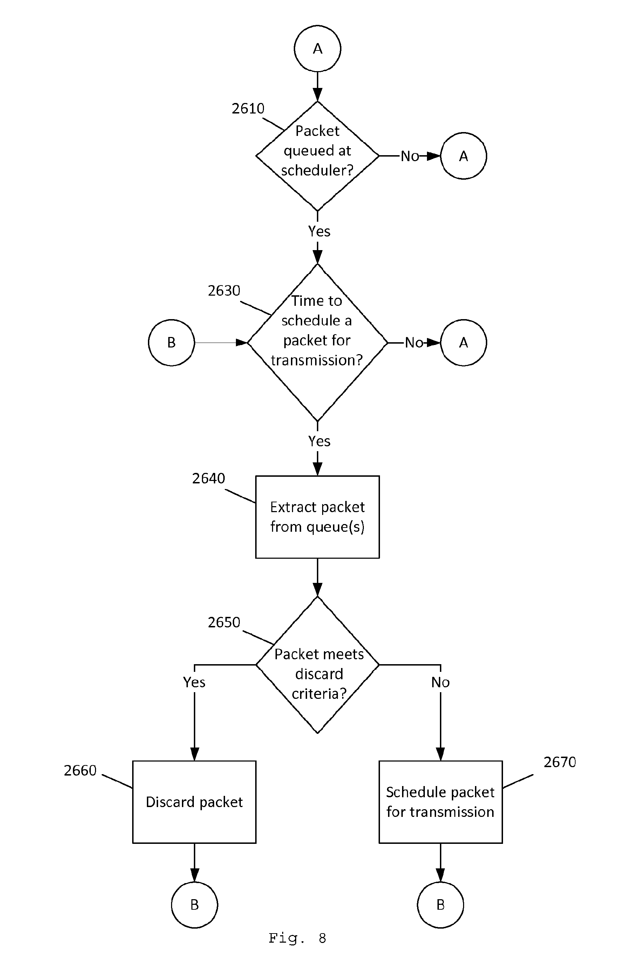

In another embodiment, when a queue is x% full, y% of B frames are discarded, preferably uniformly. When the queue is x'% full, where x' > x, y'% of B frames, where y' > y, may be discarded, preferably uniformly. This can be extended to additional levels of buffer fullness that may trigger discard of a percentage of P frames. This method may be applied to other types of data streams, as well. As previously described, there is value in uniformly discarding a percentage of VoIP frames. This intelligent discard of VoIP packets may be performed using buffer depth as the discard criteria. As an alternative to discarding in step 2520 of Fig 7 as packets are placed in the queues, the discarding could be implemented in step 2650 of Fig 8 as packets are extracted from the queues, which would cause the queue to drain more rapidly.

In another embodiment, priorities are used to apply unequal aging to packets from the same stream. For instance, the LTE standard requires packets to be aged out, i.e., discarded, after being queued for a certain, queue-specific time without being transmitted. With uneven aging, lower priority packets are allowed to stay queued a shorter time before being discarded than higher priority packets. During congestion, this approach causes lower priority packets to be discarded in preference to higher priority packets due to a shorter allowable time in queue. Such a scheme can associate a different allowable time in queue for each of a plurality of priority (or burden) levels. In this way, if bandwidth is available in time, packets are transmitted, but if congestion occurs then packets are discarded in priority order, allowing statistical multiplexing gains when there is a multiplicity of streams to which the mechanism is applied. It also allows a more instantaneous reaction to congestion.

One skilled in the art will appreciate that the prioritization described above may be used for purposes other than intelligent discard, for instance enhancing Call Admission Control by providing additional information regarding how much data from a video service may be discarded while maintaining a required service quality, thus allowing more services to be admitted than would be possible without this information.

As described above, the packet discard and frame analysis described above may be performed by communication devices or systems including, but not limited to, an access point, base station, macro cell, Pico cell, enterprise Femtocell, residential Femtocell, relay, small form factor base station, subscriber station, core network system or other device. In some embodiments, these communication devices may comprise one or more processors, transceivers, antenna systems, and computer-readable memories or media that operate to accomplish the functionality described herein.

Those of skill will appreciate that the various illustrative logical blocks, modules, units, and algorithm and method steps described in connection with the embodiments disclosed herein can often be implemented as electronic hardware, computer software, or combinations of both. To clearly illustrate this interchangeability of hardware and software, various illustrative components, units, blocks, modules, and steps have been described above generally in terms of their functionality. Whether such functionality is implemented as hardware or software depends upon the particular system and design constraints imposed on the overall system. Skilled persons can implement the described functionality in varying ways for each particular system, but such implementation decisions should not be interpreted as causing a departure from the scope of the invention. In addition, the grouping of functions within a unit, module, block or step is for ease of description. Specific functions or steps can be moved from one unit, module or block without departing from the invention.

The various illustrative logical blocks, units, steps and modules described in connection with the embodiments disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

The steps of a method or algorithm and the processes of a block or module described in connection with the embodiments disclosed herein can be embodied directly in hardware, in a software module (or unit) executed by a processor, or in a combination of the two. A software module can reside in RAM memory, flash memory, ROM memory, EPROM memory, EEPROM memory, registers, hard disk, a removable disk, a CD-ROM, or any other form of machine or computer readable storage medium. An exemplary storage medium can be coupled to the processor such that the processor can read information from, and write information to, the storage medium. In the alternative, the storage medium can be integral to the processor. The processor and the storage medium can reside in an ASIC.

Various embodiments may also be implemented primarily in hardware using, for example, components such as application specific integrated circuits ("ASICs"), or field programmable gate arrays ("FPGAs").

## Claims

1. A communication device for managing packet discards in a communication network, the communication device comprising:
a video quality measurement module configured to receive packets containing frames of a video stream and to determine contributions of the frames to quality measurements of the video stream;
a priority assignment module configured to receive the contributions of the frames to the quality measurement of the video stream and assign priorities to the packets utilizing the contributions of the frames to the quality measurements; and
a selection module configured to select at least one of the packets for discard utilizing the assigned priorities and to supply the packets not selected for discard for transmission in the communication network.

2. The communication device of claim 1, wherein the video quality measurement module is further configured to calculate an objective video quality measurement for use in determining the contributions of the frames to the quality measurement of the video stream.

3. The communication device of claim 1, wherein some of the packets are formatted according to H.264 and include nal_ref_idc fields,
wherein the video quality measurement module is further configured to set values in the nal_ref_idc fields based at least in part on the contributions of the frames to quality measurements of the video stream, and
wherein the priority assignment module is further configured to utilize the values in the nal_ref_idc fields in assigning the priorities to the packets.

4. The communication device of claim 1, wherein the video quality measurement module is further configured to receive indications of the packets selected for discard and to include the indications in determining the contributions of the frames to the quality measurements.

5. The communication device of claim 4, wherein some of the packets are formatted according to H.264 and include nal_ref_idc fields,
wherein the video quality measurement module is further configured to modify values in some of the nal_ref_idc fields based at least in part on the indications of the packets selected for discard, and
wherein the priority assignment module is further configured to utilize the values in the nal_ref_idc fields in assigning the priorities to the packets.

6. A method for operating a communication device for managing packet discards before transmission in a communication network, the method comprising:
receiving packets for transmission;
assigning a priority for each of the packets, wherein the priorities of the packets include impacts of discarding the packets on quality of services associated with the packets;
determining whether reduced bandwidth should be used to transmit the packets;
selecting, utilizing the assigned priorities, one or more of the packets for discard when it is determined that reduced bandwidth should be used to transmit the packets;
transmitting the packets not selected for discard to the communication network.

7. The method of claim 6, wherein at least some of the packets are associated with video streams, and
wherein the priorities of the packets associated with the video streams include impacts of discarding the packets associated with the video streams on video quality of the video streams.

8. The method of claim 7, wherein assigning the priority for the packets associated with the video streams comprises calculating a contribution to an objective video quality measurement for each of the packets associated with the video streams.

9. The method of claim 7, wherein some of the packets are formatted according to H.264 and include nal_ref_idc fields,
wherein assigning the priority for the packets formatted according to H.264 includes utilizing values in the nal_ref_idc fields, and
wherein a lower priority is assigned when the associated nal_ref_idc field has a zero value.

10. The method of claim 9, wherein assigning the priority for the packets formatted according to H.264 further includes analyzing whether the packets include video information that depends on video information in other packets, and further comprising setting values in the nal_ref_idc fields based at least in part on whether the packets include video information that depends on the video information in other packets.

11. The method of claim 7, wherein some of the packets are formatted according to H.264-Scalable Video Coding (SVC) and include priority_id fields, and
wherein assigning the priorities for the packets formatted according to SVC includes utilizing values in the priority_id fields,
the method further comprising modifying values in the priority_id fields in other packets related to the packets selected for discard.

12. The method of claim 7, wherein the video streams are encoded according to multiple protocols and the priorities of the packets associated with the video streams are based at least in part on immunities to discards of the protocols.

13. The method of claim 6, 7, 8, 9, 10, 11, or 12, further comprising placing the packets in queues before transmitting the packets, wherein determining whether reduced bandwidth should be used to transmit the packets is based at least in part on a depth of packets in the queues.

14. The method of claim 6, 7, 8, 9, 10, 11, or 12, further comprising placing the packets in queues before transmitting the packets, wherein packets are selected for discard when the packets have been in one of the queues for a predetermined time.

15. The method of claim 14, wherein the predetermined time is greater for packets assigned higher priorities.
